Europäisches Patentamt

European Patent Office

Office européen des brevets

(11) Publication number: **0 108 152**
**B1**

# EUROPEAN PATENT SPECIFICATION

(45) Date of publication of patent specification: **28.10.87**

(21) Application number: **83901400.8**

(22) Date of filing: **13.05.83**

(86) International application number:
**PCT/JP83/00142**

(87) International publication number:
**WO 83/04128 24.11.83 Gazette 83/27**

(51) Int. Cl.⁴: **G 11 B 5/187, G 11 B 5/127, G 11 B 5/60**

(54) NARROW-TRACK COMPOSITE DIGITAL MAGNETIC HEAD.

(30) Priority: **17.05.82 JP 71810/82 u**

(43) Date of publication of application:
**16.05.84 Bulletin 84/20**

(45) Publication of the grant of the patent:
**28.10.87 Bulletin 87/44**

(84) Designated Contracting States:
**DE FR NL**

(56) References cited:
**JP-A-12 003 016**
**JP-A-51 020 812**
**JP-A-51 149 019**
**JP-A-53 118 110**
**JP-A-54 097 008**
**JP-A-56 000 065**
**JP-A-56 022 216**
**JP-U-54 019 721**
**JP-U-55 128 271**
**US-A-3 845 550**

**PATENTS ABSTRACTS OF JAPAN, vol. 3, no. 94 (E-129), August 10, 1979**

(73) Proprietor: **FUJI ELECTROCHEMICAL CO.LTD.**
**36-11 Shinbashi 5-chome**
**Minatoku Tokyo 105 (JP)**

(72) Inventor: **TORII, Michihiro**
**1-9-15, Kamoe Hamamatsu-shi**
**Shizuoka 432 (JP)**
Inventor: **NAKAYAMA, Masao**
**2660-2, Arai Arai-machi**
**Hamana-gun Shizuoka 431-03 (JP)**

(74) Representative: **Klingseisen, Franz, Dipl.-Ing. et al**
**Dr. F. Zumstein sen. Dr. E. Assmann Dr. F. Zumstein jun. Dipl.-Ing. F. Klingseisen Bräuhausstrasse 4**
**D-8000 München 2 (DE)**

(56) References cited:
**IDEM**
**PATENTS ABSTRACTS OF JAPAN, vol. 6, no. 41 (P-106) (919), March 13, 1982**
**IDEM**
**PATENTS ABSTRACTS OF JAPAN, vol. 4, no. 127 (P-26) (609), September 6, 1980**

Courier Press, Leamington Spa, England.

**0 108 152**

(56) References cited:

**PATENTS ABSTRACTS OF JAPAN, vol. 5, no. 60 (P-58) (732), April 23, 1981**

**PATENTS ABSTRACTS OF JAPAN, vol. 1, no. 123, October 17, 1977, page 5175 E 77**

**PATENTS ABSTRACTS OF JAPAN, vol. 5, no. 36 (P-51) (708), March 7, 1980**

**IBM TECHNICAL DISCLOSURE BULLETIN, vol. 24, no. 2, July 1981, ARMONK (US) J.E HITCHNER et al.: "Fabrication of ferrite magnetic head", page 995**

## Description

The invention relates to a narrow-track magnetic head for a magnetic recording device having a magnetic recording medium comprising a non-magnetic slider part and a chip core fixed to the non-magnetic slider part, wherein said chip core has a read/write gap and a non-magnetic region of a non-magnetic substance.

From JP—A—56-222126 a magnetic head assembly is already known comprising a non-magnetic slider part and a chip core fixed to this slider part.

Furthermore JP—A—55-157120 discloses a chip core having a read/write gap formed of trapezoidal protrusions and a region of a non-magnetic substance filled in the grooves at each side of the gap which region being thicker than the gap width and therefore the track width. A base of the grooves is parallel to the gap. A similar construction is used according to JP—A—52-55620 in order to achieve a narrow-track width.

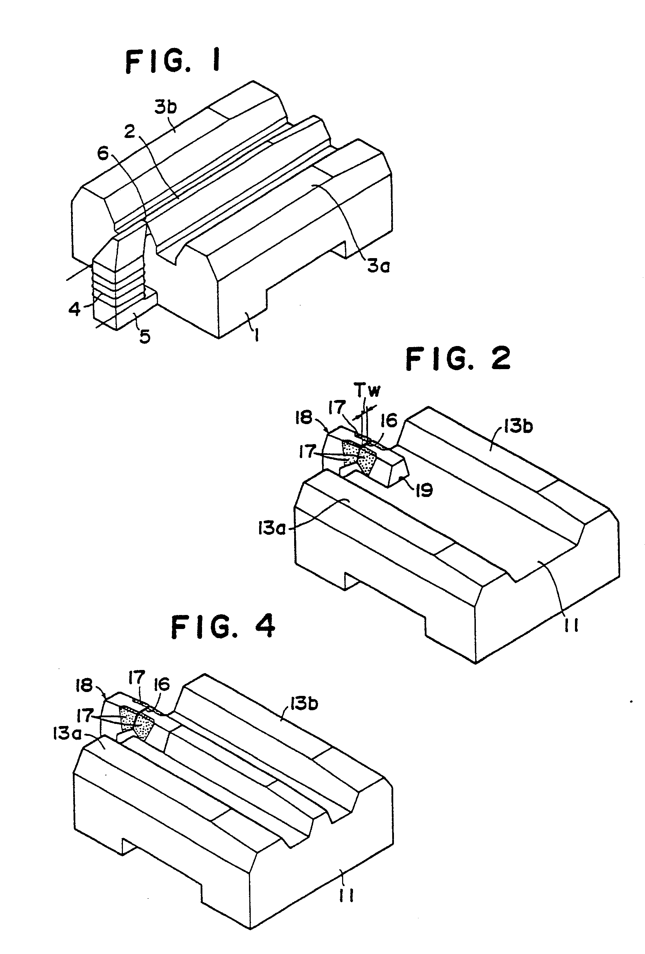

The so-called monolithic head is known as one type of floating narrow-track magnetic head, which is usually used for hard magnetic disk units, or the like. As shown in Fig. 1, this is a monolithic head made completely of ferrite, and includes a slider part 1 so as to provide an even plane. The slider part 1 has a grooved structure so that a center rail 2 is formed at the center of a floating plane (the top in Fig. 1), and also side rails 3a, 3b are formed on either side thereof, and a core 5 wound with a coil 4 is connected to an extension of the center rail 2 via a read/write gap (hereinafter referred to "R/W gap") 6. Consequently, the width of the center rail 2 corresponds exactly to the width of a read/write track. The float distance, which is the gap between the magnetic recording medium, such as a magnetic disc, and the magnetic head, is adjusted by the width of the side rails 3a, 3b.

However, in a magnetic head of such a structure, it is very difficult during the process of manufacture to work the track width to a predetermined value (usually some dozen microns) to provide mechanical precision, and also finish the gap depth precisely to a predetermined value (usually several microns) to obtain electromagnetic conversion characteristics with good reproducibility. The center rail 2 must be trapezoidal in section for mechanical strength, therefore the track width would be changed by grinding the floating plane, which raises the difficulty of how to adjust the track width to a predetermined value because over-grinding would leave a too-wide track width that must be regrooved, but regrooving would change the gap depth. Besides, since the head is made completely of ferrite, including the slider part 1, leakage inductance is high, and thus the data transmission speed is inevitably limited. In addition, the quantity of ferrite material used is considerable, so that the use of such a costly material as a monocrystalline material raises a financial difficulty.

It is desirable that the regions of non-magnetic substance taper outward so that no part thereof is parallel to the gap.

It is the object of the present invention to provide a narrow-track magnetic head the leakage inductance of which being minimized, which has the desired characteristics, which permits to increase the data transmission speed and which ensures the operativeness with a narrow track.

For this purpose the narrow-track magnetic head according to the present invention is characterized in that said non-magnetic region has a first part extending in opposite direction relative to said read/write gap and a second part extending in opposite directions relative to said read/write gap and that, in a cross-section parallel to the floating plane of the head, said non-magnetic region comprises parallel and straight side lines of the second part which are aligned to parallel and straight side lines of the first part and side portions remote from the gap tapered outwardly to thereby minimize side portions which are parallel to said read/write gap.

The chip core has preferably an open magnetic circuit into which a coil can be inserted at a side opposite to the read/write gap wherein said chip core has a back bar having a width larger than the track width to form a closed magnetic circuit.

The chip core is particularly made of a ferrite material having specific resistance of about $10^4\Omega \cdot$ cm or less.

Brief description of drawings

Fig. 1 is a perspective view of a magnetic head according to the prior art;

Fig. 2 is a perspective view of a magnetic head embodying the present invention;

Fig. 3 shows one example of the process of manufacturing the magnetic head according to this invention;

Fig. 4 is a perspective view of a magnetic head according to another embodiment of this invention;

Fig. 5 is a perspective view of a magnetic head according to a further embodiment of this invention, and one example of the manufacturing process thereof; and

Fig. 6 is a perspective view of a magnetic head according to another embodient of this invention.

Preferred embodiments of the invention

The invention will now be described with reference to the accompanying drawings. Fig. 2 is a drawing of one embodiment of a magnetic head according to this invention. The magnetic head is constructed to have a chip core 18 which is broader than a track width Tw, with non-magnetic material 17 embedded into both sides thereof and an R/W gap 6 provided therefor, the chip core being fixed in a notch 19 formed at one end of a non-magnetic slider 11. Reference numerals 13a, 13b each denote side rails, which are so-called air bearing flat and, as described above, the float distance can be adjusted by the width thereof.

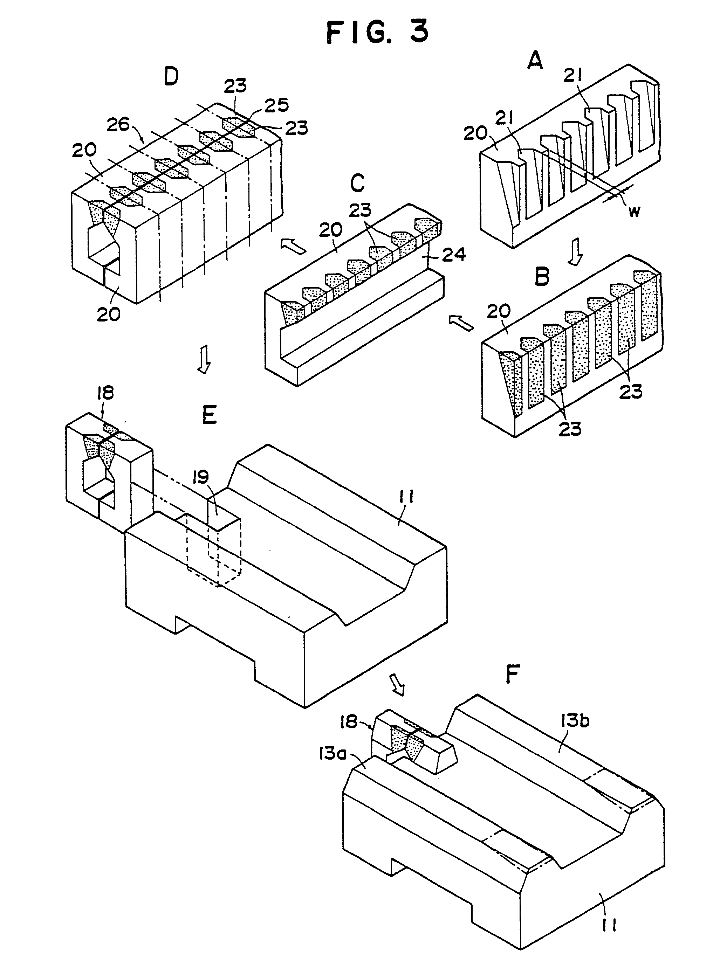

A magnetic head of such structure can be manufactured efficiently by the process shown in Fig. 3. First, as shown in step A of Fig. 3, a block 20, which is a rectangular parallelepiped of a ferromagnetic material of, for example, Mn—Zn ferrite of $10^4\Omega \cdot$ cm or less, is prepared, and then a plurality of inclined grooves 21 are formed therein at a constant pitch. The shape thereof cannot be specified numerically, however, it is desirable that each groove is formed to have as little as possible area parallel to the R/W gap 16. As illustrated, the inclined grooves 21 are tapered outward, so that it does not operate as a pseudo-R/W gap. In this case, the width $w$ of the projections is adjusted to coincide precisely with the track width Tw. The grooving of such a ferromagnetic material can be done very accuractely by a dicing machine. Then, as shown in step B of Fig. 3, non-magnetic material 23 is embedded into each inclined groove 21. A ceramic such as, for example, barium titanate, calcium titanate, or forsterite or glass can be used as the non-magnetic material 23. After the non-magnetic material is embedded into the grooves 21, a longitudinal recess 24 is formed along the blocks 20 to provide a U-bar which is U-shaped in section (step C of Fig. 3), and then two of such bars are connected via a non-magnetic gap 25 to face each other, thus forming a bonded bar 26 (Step D of Fig. 3). Titanium foil or a sputtered film of silicon dioxide, glass, or the like are suitable for the material of the non-magnetic gap 25. Chip cores can be obtained by cutting the bonded bar 26 at the center of the positions in which the non-magnetic material 23 is embedded as shown by broken lines, step D of Fig. 3.

In step E of Fig. 3, a chip core 18 thus formed is fixed into a notch 19 formed at one end of a slider 11 which is also grooved. The slider 11 is made of a non-magnetic material such as ceramic or glass, and glass deposition, for example, can be employed for fixing the chip core 18 in position. Finally, the floating plane is ground (step F of Fig. 3 and Fig. 2). When grooving the slider, it is preferable that the slider is grooved before the chip core is fixed thereon to simplify the work, however it can be grooved after the chip core is mounted.

In the process of manufacturing the magnetic head according to this invention, the track width can be specified precisely on a dicing machine. Further the yield of chip cores can be improved since the core volume is small, and they can be mass-produced efficiently because no changes are caused in the track width Tw by grinding the floating plane.

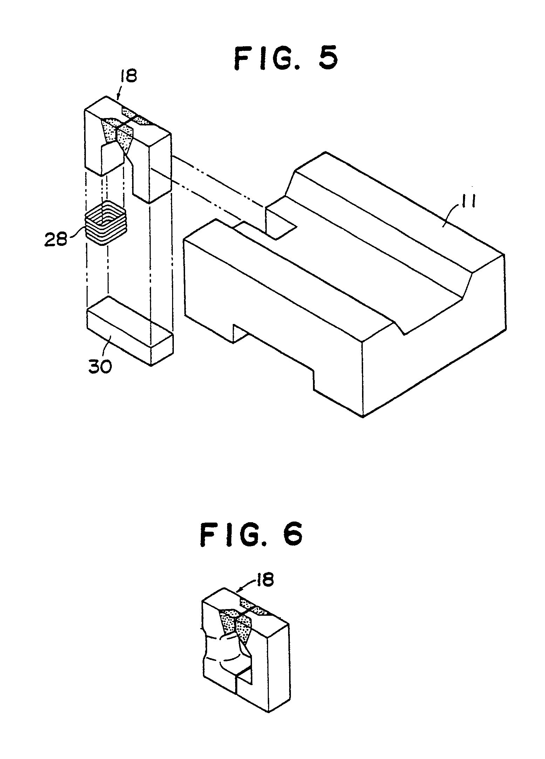

Fig. 4 is a perspective view of another embodiment of the magnetic head according to this invention. In the embodiment of Fig. 4, a center rail is formed in alignment with the chip core 18. The shape of the slider 11 can be changed, as illustrated, as appropriate for its usage. The width precision of the slider 11 is determined only by the float distance, and since the center rail can be of any width so long as it is larger than the track width, the machining of the slider can be facilitated.

This invention provides a composite digital magnetic head constituted as described above. Since only the portion that is left behind after the track width is adjusted is the effective track width acting as an R/W track in the read/write operations, its adaptability to a narrow track can be secured easily. Moreover, since the chip core itself can have a considerable thickness, its handling is facilitated and no change occurs in the track width from the grinding of the floating plane, therefore it can be manufactured easily in mass production. Since the volume of the regions magnetic substance is small to minimize leakage inductance, the frequency characteristics and data transmission speed can be impoved, and the cost is reduced even when an expensive material such as a ferrite single crystal is used to ensure a high performance.

The magnetic efficiency can be improved by the geometrical effect that the head can be made thicker enough than the track width, and that leakage inductance is minimized. Consequently, the rear of the magnetic circuit can be an open magnetic circuit, a coil 28 preformed about a bobbin, or of self-fusing wire, is inserted, and then a back bar 30 is provided so that the whole acts as a closed circuit (Fig. 5). The part of the core supporting the coil could be chamfered, as shown in Fig. 6, or it could be formed to have a circular section when constructing the chip core.

**Claims**

1. A narrow-track magnetic head for a magnetic recording device having a magnetic recording medium, comprising a non-magnetic slider part and a chip core fixed to the non-magnetic slider part, wherein said chip core has a read/write gap and a non-magnetic region of a non-magnetic substance, characterized in that said non-magnetic region (17) has a first part extending in opposite directions relative to said read/write gap (16) and a second part extending in opposite directions relative to said read/write gap (16) and that, in a cross section parallel to the floating plane of the head, said non-magnetic region comprises parallel and straight side lines of the second part which are aligned to parallel and straight side lines of the first part and side portions remote from the gap tapered outwardly to thereby minimize side portions which are parallel to said read/write gap (16).

2. A magnetic head according to claim 1, wherein said chip core has an open magnetic circuit into which a coil (28) can be inserted at a side opposite to the read/write gap (16), and wherein said chip core has a back bar (30) having a width larger than the track width to form a closed magnetic circuit.

3. A magnetic head according to claim 1, wherein the chip core is made of a ferrite material having specific resistance of about $10^4\Omega \cdot$ cm or less.

**Patentansprüche**

1. Magnetkopf mit schmaler Spurbreite für eine magnetische Aufzeichnungsvorrichtung mit einem magnetischen Aufzeichnungsmedium, der ein nicht-magnetisches Gleitteil und einen an dem nicht-magnetischen Gleitteil befestigten Busteinkern aufweist, wobei dieser Bausteinkern mit einem Lese-/Schreibspalt und einem nicht-magnetischen Bereich aus einer nicht-magnetischen Substanz versehen ist, dadurch gekennzeichnet, daß der nicht-magnetische Bereich (17) einen ersten Abschnitt aufweist, der sich in entgegengesetzte Richtungen relativ zum Lese-/Schreibspalt (16) erstreckt, sowie einen zweiten Abschnitt, der sich in entgegengesetzte Richtungen relativ zum Lese-/Schreibspalt (16) erstreckt, und daß in einem Querschnitt parallel zur Schwimmebene des Kopfes dieser nicht-magnetische Bereich parallele und gerade Seitenlinien des zweiten Abschnitts umfaßt, die mit parallelen und geraden Seitenlinien des ersten Abschnitts ausgerichtet sind, sowi vom Spalt abliegende Seitenabschnitte, die nach außen schräg verlaufen, um dadurch die Seitenabschnitte auf ein Minimum zu begrenzen, die parallel zum Lese-/Schreibspalt (16) sind.

2. Magnetkopf nach Anspruch 1, wobei der Bausteinkern einen offenen magnetischen Kreis aufweist, in den eine Spule (28) auf einer dem Lese-/Schreibspalt (16) gegenüberliegenden Seite einsetzbar ist, und wobei der Bausteinkern ein rückwärtiges Joch (30) mit einer Breite aufweist, die größer ist als die Spurbreite, um einen geschlossenen Magnetkreis un bilden.

3. Magnetkopf nach Anspruch 1, wobei der Bausteinkern aus einem Ferritmaterial mit einem spezifischen Widerstand von etwa $10^4\Omega \cdot cm$ oder weniger besteht.

**Revendications**

1. Tête magnétique à piste étroite destinée à un dispositif d'enregistrement magnétique comprenant un support d'enregistrement magnétique, constituée par une partie en glissière non magnétique et un noyau en microplaquette fixé à la partie en glissière non magnétique, ledit noyau en microplaquette comprenant un entrefer de lecture/écriture et une région non magnétique faite dans une substance non magnétique, caractérisée ce ce que ladite région non magnétique (17) comprend une première partie qui s'étend en sens opposés par rapport audit entrefer de lecture/écriture (16) et une seconde partie qui s'étend en sens opposéspar rapport audit entrefer de lecture/écriture et en ce que, dans une section transversale parallèle à la surface flottante de la tête, ladite région non magnétique comprend des lignes latérales parallèse et droites de la seconde partie qui sont alignées aur des lignes latérales parallèles et droites de la première partie, et des parties latérales obliques éloignées de l'entrefer dirigées vers l'extérieur afin de réduire au minimum les parties latérales parallèles audit entrefer de lecture/écriture (16).

2. Tête magnétique selon la revendication 1, dans laquelle ledit noyau en microplaquette comprend un circuit magnétique ouvert dans lequel un enroulement (28) peut être inséré du côté opposé à l'entrefer de lecture/écriture (16), et dans laquelle ledit noyau en microplaquette comprend une barre de culasse (30) dont la largeur est supérieure à la largeur de piste, afin de former un circuit magnétique fermé.

3. Tête magnétique selon la revendication 1, dans laquelle le noyau en microplaquette est fabriqué dans une ferrite ayant une résistance spécifique d'environ $10^4\Omega \cdot cm$ ou moins.

# FIG. 1

# FIG. 2

# FIG. 4

1

# FIG. 3

# FIG. 5

# FIG. 6